# EUROPÄISCHE PATENTSCHRIFT

(11) **EP 4 274 677 B1**
(45) Veröffentlichungstag und Bekanntmachung des Hinweises auf die Patenterteilung: **26.06.2024**
(21) Anmeldenummer: 21844638.3
(22) Anmeldetag: 16.12.2021
(51) Int. Cl.: B01J 8/00, B01J 8/12, B01J 8/44, B65D 88/72, F26B 3/08, F26B 25/00

(54) **FLUIDISIERUNGSAPPARAT UND VERFAHREN ZUR BEHANDLUNG VON PARTIKELFÖRMIGEN MATERIAL**
FLUIDIZING DEVICE AND METHOD FOR TREATING PARTICULATE MATERIAL
DISPOSITIF DE FLUIDISATION ET PROCÉDÉ DE TRAITEMENT DE MATÉRIAU PARTICULAIRE

(30) Priorität: 11.01.2021 DE 102021200161
(43) Veröffentlichungstag der Anmeldung: 15.11.2023
(73) Patentinhaber: Glatt Gesellschaft mit beschränkter Haftung, 79589 Binzen (DE)
(72) Erfinder: ZIMMERMANN, Dirk, 79664 Wehr (DE); THIES, Jochen, 79540 Lörrach (DE); GOTTSCHLING, Heinz, 79576 Weil am Rhein (DE)
(74) Vertreter: Patentanwälte Magenbauer & Kollegen Partnerschaft mbB
(86) Internationale Anmeldenummer: PCT/EP2021/086079
(87) Internationale Veröffentlichungsnummer: WO 2022/148625

(56) Entgegenhaltungen:
- DE-A1-102014 004 815
- DE-A1-102018 103 801
- JP-A- H07 265 683
- US-A1- 2004 013 761
- US-A1- 2018 325 828

## Beschreibung

Die Erfindung betrifft einen Fluidisierungsapparat zur Behandlung von partikelförmigem Material, mit einer eine Längsachse aufweisenden Fluidisierungseinheit, die einen die Fluidisierungseinheit in eine Verteilerkammer und eine oberhalb der Verteilerkammer angeordnete Fluidisierungskammer unterteilenden, perforierten Anströmboden aufweist, wobei die Fluidisierungskammer einen Materialeinlass für das zu behandelnde Material und die Verteilerkammer einen über einen eine Materialauslassfläche, eine untere und eine obere Kante aufweisenden Materialauslass für das behandelte Material verfügenden Materialaustrag umfasst, wobei der Anströmboden in einer Betriebsstellung oberhalb der oberen Kante des Materialauslasses angeordnet ist und die Verteilerkammer einen Fluideinlass und die Fluidisierungskammer einen Fluidauslass für ein vom Fluideinlass durch den perforierten Anströmboden zum Fluidauslass strömendes, das Material in der Fluidisierungskammer fluidisierendes Prozessgas umfasst.

Darüber hinaus betrifft die Erfindung ein Verfahren zur Behandlung von partikelförmigem Material in einem Fluidisierungsapparat, mit einer eine Längsachse aufweisenden Fluidisierungseinheit, die einen die Fluidisierungseinheit in eine Verteilerkammer und eine oberhalb der Verteilerkammer angeordnete Fluidisierungskammer unterteilenden, perforierten Anströmboden aufweist, wobei die Fluidisierungskammer einen Materialeinlass für das zu behandelnde Material und die Verteilerkammer einen über einen eine Materialauslassfläche, eine untere und eine obere Kante aufweisenden Materialauslass für das behandelte Material verfügenden Materialaustrag umfasst, wobei der Anströmboden in einer Betriebsstellung oberhalb der oberen Kante des Materialauslasses angeordnet ist und die Verteilerkammer einen Fluideinlass und die Fluidisierungskammer einen Fluidauslass für ein vom Fluideinlass durch den perforierten Anströmboden zum Fluidauslass strömendes, das Material in der Fluidisierungskammer fluidisierendes Prozessgas umfasst, wobei in einem Betriebszustand zuerst die Fluidisierungskammer über den Materialeinlass mit zu behandelndem Material befüllt und danach das Material durch das durch die Fluidisierungskammer strömende Prozessgas behandelt wird. Fluidisierungsapparate zur Behandlung von partikelförmigem Material und insbesondere Wirbelschichtapparate sind schon seit langem bekannt.

US2004013761 offenbart eine Vorrichtung zum Behandeln von partikelförmigem Gut, mit einer Wirbelbetteinheit die getrennt ist in eine Prozesskammer zum Aufnehmen und Behandeln des Gutes mit Prozessluft mit einem Anströmboden in der Prozesskammer aus einander überlappenden Leitplatten, und eine Verteilerkammer die unten den Anströmboden liegt. Zum Entleeren des behandelten Gutes wird ein Teil des Bodens oberhalb der oberen Kante des Materialauslasses positioniert während der Behandlung wird der Teil des Bodens positioniert um den Materialauslass zu schließen, indem der Boden mit dessen Rand eine Dichtung bildet.

EP 2 611 531 A1 offenbart eine Fließbettapparatur zum Verarbeiten von partikelförmigem Material, die eine eine Verteilerkammer einschließende Kammer, einen perforierte, oberhalb der Verteilerkammer angeordneten Anströmboden, einen Einlass und einen Auslass für das Prozessgas und eine eine untere und einen obere Kante aufweisende, eine Höhe und eine Öffnungsfläche definierende Austragsöffnung umfasst, wobei der Anströmboden oberhalb der unteren Kante der Austragsöffnung derart positioniert ist, dass die Öffnungsfläche der Austragsöffnung in eine Öffnungsfläche unterhalb des Anströmbodens und eine Öffnungsfläche oberhalb des Anströmbodens geteilt ist.

Nachteilig hieran ist, dass eine Absperrvorrichtung, wie bspw. eine Klappe, zum Verschließen der Fließbettapparatur notwendig ist, deren Position an der Austragsöffnung eine komplexe, an die Geometrie der Fließbettapparatur angepasste Geometrie erfordert.

Aufgabe der Erfindung ist es daher einerseits die Entleerung eines Fluidisierungsapparates in Bezug auf die Entleergeschwindigkeit weiter zu verbessern und andererseits gleichzeitig die Nachteile des Standes der Technik zu überkommen.

Die Aufgabe wird bei einem Fluidisierungsapparat der eingangs genannten Art dadurch gelöst, dass der Anströmboden relativ zur Fluidisierungseinheit bewegbar angeordnet ist, wobei der Anströmboden in einer Entleerstellung durch eine Bewegung des Anströmbodens relativ zur Fluidisierungseinheit zumindest teilweise unterhalb der oberen Kante des Materialauslasses positioniert ist, sodass sich eine Fluidverbindung zwischen dem in der Verteilerkammer angeordneten Materialauslass und der Fluidisierungskammer am Anströmboden vorbei ausbildet, um behandeltes Material aus der Fluidisierungseinheit auszutragen.

In der Betriebsstellung ist der Anströmboden oberhalb der oberen Kante des Materialauslasses angeordnet. Ist der Anströmboden in Betriebsstellung befindet sich der Fluidisierungsapparat im Betriebszustand. Somit ist in der Betriebsstellung das Material ohne einen Materialaustrag über den Materialauslass in der Fluidisierungskammer behandelbar.

In der Entleerstellung ist der Anströmboden durch eine Bewegung des Anströmbodens relativ zur Fluidisierungseinheit zumindest teilweise unterhalb der oberen Kante des Materialauslasses positioniert. Ist der Entleerstellung befindet sich der Fluidisierungsapparat im Entleerzustand.

Der Anströmboden trennt in dem bevorzugten Fluidisierungsapparat im Betriebszustand insbesondere die Fluidisierungskammer und Verteilerkammer voneinander ab. Somit ist durch die Position des Anströmbodens im Betriebszustand (Betriebsstellung), nämlich oberhalb einer oberen Kante des Materialauslasses, ein Abdichten des Materialauslasses während der Behandlung des partikelförmigen Materials nicht mehr zwingend erforderlich. Die am Materialaustrag angeordnete Abdichtungseinrichtung kann somit entfallen, was konstruktiv zu einer bedeutend einfacheren technischen Ausgestaltung führt und daher auch mit einer Einsparung an Herstellungskosten einhergeht. Das partikelförmige Material wird in der Fluidisierungskammer fluidisiert, sodass sich das Material im Wesentlichen wie eine Flüssigkeit verhält.

Vorteilhafterweise kann durch die Relativbewegung zwischen Anströmboden und Fluidisierungseinheit das partikelförmige Material nach der Behandlung über den Materialaustrag entleert werden. Die Relativbewegung kann in einer Art und Weise ausgeführt werden, dass das Prozessgas die Entleerung des behandelten Materials über den Materialaustrag unterstützt. In diesem Fall ist der Anströmboden in der Entleerstellung so positioniert, dass die Materialauslassfläche des Materialauslasses in eine Prozessgasauslassfläche unterhalb des Anströmbodens und eine Materialauslassfläche oberhalb des Anströmbodens unterteilt ist.

Nach einer diesbezüglich vorteilhaften Ausgestaltung des Fluidisierungsapparates weist die Fluidisierungseinheit eine quer zur Längsachse der Fluidisierungseinheit verlaufende Schwenkachse auf, an der der Anströmboden schwenkbar angeordnet ist. Zweckmäßigerweise verläuft die Schwenkachse senkrecht zur zentralen Längsachse der Fluidisierungseinheit. Durch diese Ausführung ist eine einfache Relativbewegung in Form einer Schwenkbewegung um die Schwenkachse möglich. Hierdurch wird zum einen der in der Verteilerkammer angeordnete Materialauslass des Materialaustrags für die Entleerung des in der Fluidisierungskammer behandelten Materials geöffnet und zum anderen wird die Entleerung durch die Schrägstellung des Anströmbodens - wie auch bei Flüssigkeiten - befördert. Überdies wird der Anströmboden bevorzugt um die Schwenkachse um einen Winkel zwischen 0° und 60° geschwenkt, zweckmäßigerweise um einen Winkel von 5° bis 10°. Durch die Schwenkbewegung bildet sich zwischen dem Anströmboden und der Verteilerkammer und/oder der Fluidisierungskammer ein im Wesentlichen ringförmiger oder sichelförmiger Spalt aus, der nicht zu groß werden darf, da hier ansonsten die Gefahr besteht, dass im Entleerzustand trotz der Durchströmung des Spalts mit Prozessgas behandeltes Material in die Verteilerkammer gelangen kann. Prinzipiell wird der Spalt durch das Prozessgas abgedichtet.

In einer darüber hinaus vorteilhaften hierzu alternativen Ausgestaltung des Fluidisierungsapparates ist der Anströmboden in Achsrichtung der Längsachse verschiebbar angeordnet. Der Anströmboden wird in Achsrichtung der Längsachse in Form einer Linearbewegung verschoben. Zweckmäßigerweise wird der Anströmboden verschoben, bis dessen Oberseite mit der unteren Kante bündig oder unterhalb dieser positioniert ist. Bevorzugt ist der Anströmboden in Achsrichtung der Längsachse verschiebbar angeordnet. Auch durch die alternative Ausgestaltung wird der Materialauslass für eine verbesserte Entleerung nach der Behandlung des partikelförmigen Materials geöffnet.

Des Weiteren vorteilhaft weist die Fluidisierungseinheit eine quer zur Längsachse der Fluidisierungseinheit verlaufende und in Achsrichtung der Längsachse verschiebbar angeordnete Schwenkachse auf, an der der Anströmboden schwenkbar angeordnet ist. Durch diese Ausgestaltung des Fluidisierungsapparates werden die Vorteile der beiden alternativen Ausgestaltungen des bevorzugten Fluidisierungsapparates, nämlich der Schwenk- und der Linearbewegung, kombiniert. Zudem ist der sich ausbildende Spalt zwischen Fluidisierungseinheit und Anströmboden kleiner.

Gemäß einer zusätzlichen vorteilhaften Ausbildung des Fluidisierungsapparates ist der Anströmboden, insbesondere die Oberseite des Anströmbodens, in der Entleerstellung durch die Bewegung des Anströmbodens relativ zur Fluidisierungseinheit mit der unteren Kante des Materialauslasses bündig oder zumindest teilweise unterhalb der unteren Kante des Materialauslasses positioniert. Besonders bevorzugt ist der Anströmboden, insbesondere die Oberseite des Anströmbodens, in der Entleerstellung durch die Bewegung des Anströmbodens relativ zur Fluidisierungseinheit unterhalb der unteren Kante des Materialauslasses positioniert. Hierdurch ist die Materialauslassfläche maximal geöffnet, sodass eine Entleerung des behandelten Materials effizient und schnell erfolgen kann.

Weiter vorteilhaft weist der Materialaustrag eine Absperrvorrichtung auf. Durch die Absperrvorrichtung kann der Materialaustrag verschlossen oder freigegeben werden. Hierdurch besteht die Möglichkeit den Zeitpunkt der Freigabe des Materialaustrages zu steuern.

Die Aufgabe wird zudem bei einem Verfahren der eingangs genannten Art dadurch gelöst, dass nach dem Betriebszustand der relativ zur Fluidisierungseinheit bewegbar angeordnete Anströmboden derart in eine Entleerstellung bewegt wird, dass zumindest ein Teil des Anströmbodens unterhalb der oberen Kante des Materialauslasses positioniert ist, sodass sich eine Fluidverbindung zwischen dem in der Verteilerkammer angeordneten Materialauslass und der Fluidisierungskammer am Anströmboden vorbei ausbildet und das behandelte Material über den Materialauslass aus der Fluidisierungseinheit ausgetragen wird.

In der Betriebsstellung ist der Anströmboden oberhalb der oberen Kante des Materialauslasses angeordnet. Ist der Anströmboden in Betriebsstellung befindet sich der Fluidisierungsapparat im Betriebszustand. Somit ist in der Betriebsstellung das Material ohne einen Materialaustrag über den Materialauslass in der Fluidisierungskammer behandelbar.

In der Entleerstellung ist der Anströmboden durch eine Bewegung des Anströmbodens relativ zur Fluidisierungseinheit zumindest teilweise unterhalb der oberen Kante des Materialauslasses positioniert. Ist der Entleerstellung befindet sich der Fluidisierungsapparat im Entleerzustand.

Der Anströmboden trennt in dem bevorzugten Fluidisierungsapparat im Betriebszustand die Fluidisierungskammer und Verteilerkammer voneinander ab. Somit ist durch die Position des Anströmbodens im Betriebszustand (Betriebszustand), nämlich oberhalb einer oberen Kante des Materialauslasses, ein Abdichten des Materialauslasses während der Behandlung des partikelförmigen Materials nicht mehr zwingend erforderlich. Die am Materialaustrag angeordnete Abdichtungseinrichtung kann somit entfallen, was konstruktiv zu einer bedeutend einfacheren technischen Ausgestaltung führt und daher auch mit einer Einsparung an Herstellungskosten einhergeht.

Vorteilhafterweise kann durch die Relativbewegung zwischen Anströmboden und Fluidisierungseinheit das partikelförmige Material nach der Behandlung über den Materialaustrag entleert werden. Die Relativbewegung in Form einer Schwenk- und/oder Linearbewegung kann in einer Art und Weise ausgeführt werden, dass das Prozessgas die Entleerung des behandelten Materials über den Materialaustrag unterstützt. In diesem Fall ist der Anströmboden in der Entleerstellung so positioniert, dass die Materialauslassfläche des Materialauslasses in eine Prozessgasauslassfläche unterhalb des Anströmbodens und eine Materialauslassfläche oberhalb des Anströmbodens unterteilt ist.

Gemäß einer diesbezüglich vorteilhaften Fortbildung des Verfahrens weist die Fluidisierungseinheit eine quer zur Längsachse der Fluidisierungseinheit verlaufende Schwenkachse auf, an der der Anströmboden schwenkbar angeordnet ist und um die der Anströmboden nach der Behandlung des partikelförmigen Materials geschwenkt wird, zweckmäßigerweise um 5° bis 10°. Durch diese Ausführung ist eine einfache Relativbewegung in Form einer Schwenkbewegung um die Schwenkachse möglich. Hierdurch wird zum einen der in der Verteilerkammer angeordnete Materialauslass des Materialaustrags für die Entleerung des in der Fluidisierungskammer behandelten Materials geöffnet und zum anderen wird die Entleerung durch die Schrägstellung des Anströmbodens befördert. Überdies wird der Anströmboden bevorzugt um die Schwenkachse um einen Winkel zwischen 0° und 60° geschwenkt, zweckmäßigerweise um einen Winkel von 5° bis 10°. Durch die Schwenkbewegung bildet sich zwischen dem Anströmboden und der Verteilerkammer und/oder der Fluidisierungskammer ein im Wesentlichen sichel- oder ringförmiger Spalt aus, der nicht zu groß werden darf, da hier ansonsten die Gefahr besteht, dass im Entleerzustand trotz der Durchströmung des Spalts mit Prozessgas behandeltes Material in die Verteilerkammer gelangen kann. Das Prozessgas dichtet zweckmäßigerweise den Spalt im Entleerzustand ab.

In einer darüber hinaus vorteilhaften Ausgestaltung des Verfahrens ist der Anströmboden in Achsrichtung der Längsachse verschiebbar angeordnet und wird in Achsrichtung der Längsachse in Form einer Linearbewegung verschoben, zweckmäßigerweise bis der Anströmboden unterhalb der unteren Kante positioniert ist. Bevorzugt wird der Anströmboden in Achsrichtung der Längsachse verschoben. Auch durch die alternative Ausgestaltung wird der Materialauslass für eine verbesserte Entleerung nach der Behandlung des partikelförmigen Materials geöffnet.

Besonders bevorzugt führt der Anströmboden beim Verbringen in die Entleerstellung eine Schwenkbewegung und eine Linearbewegung aus. Hierbei wird der Anströmboden einerseits mittels einer Schwenkbewegung um die Schwenkachse verschwenkt und andererseits in Achsrichtung der Längsachse in Form einer Linearbewegung verschoben. Die Schenk- und die Linearbewegung können in beliebiger Reihenfolge nacheinander oder zeitgleich zueinander ausgeführt werden. Hierdurch kommen sowohl die Vorteile der Schwenk- als auch der Linearbewegung zum Tragen.

Entsprechend einer zusätzlichen vorteilhaften Weiterbildung des Verfahrens wird der Anströmboden in die Entleerstellung dergestalt relativ zur Fluidisierungseinheit bewegt, sodass zumindest ein Teil des Anströmbodens unterhalb der unteren Kante des Materialauslasses positioniert ist. Besonders bevorzugt wird der Anströmboden in die Entleerstellung dergestalt relativ zur Fluidisierungseinheit bewegt, sodass der Anströmboden unterhalb der unteren Kante des Materialauslasses positioniert ist. Alternativ ist die obere Kante des Anströmbodens mit der unteren Kante des Materialauslasses bündig angeordnet. In beiden Fällen ist die Materialauslassfläche maximal geöffnet, sodass eine Entleerung des behandelten Materials effizient und schnell erfolgen kann.

Ein weiterer vorteilhafter Aspekt besteht darin, dass der Materialaustrag eine Absperrvorrichtung aufweist, die den Materialaustrag freigibt, sobald der Anströmboden sich in der Entleerstellung befindet. Zweckmäßigerweise gibt die Absperrvorrichtung den Materialaustrag frei, sobald zumindest ein Teil des Anströmbodens unterhalb der unteren Kante des Materialauslasses positioniert ist. Hierdurch ist die Materialauslassfläche maximal groß geöffnet und das in der Fluidisierungskammer der Fluidisierungseinheit behandelte Material kann effektiv und zeitsparend aus der Fluidisierungseinheit des Fluidisierungsapparates ausgetragen werden.

Nachfolgend wird die Erfindung anhand der beiliegenden Zeichnung näher erläutert und in dieser zeigen
- Figur 1: eine Draufsicht auf eine schematische Darstellung einer ersten Ausführungsform eines Fluidisierungsapparates in Betriebsstellung mit einer Schnittebene A-A,
- Figur 2: einen Schnitt entlang der in Fig. 1 dargestellten Schnittebene A-A durch die schematische Darstellung der ersten Ausführungsform des Fluidisierungsapparates in Betriebsstellung mit einem auf einer Schwenkachse angeordneten Anströmboden in horizontaler Position,
- Figur 3: einen Schnitt entlang der in Fig. 1 dargestellten Schnittebene A-A durch die schematische Darstellung der ersten Ausführungsform des Fluidisierungsapparates in Entleerstellung mit dem auf der Schwenkachse angeordneten Anströmboden in einer um einen Winkel α um die Schwenkachse geschwenkten Position,
- Figur 4: eine Draufsicht auf die schematische Darstellung der ersten Ausführungsform des Fluidisierungsapparates in Entleerstellung,
- Figur 5: eine Draufsicht auf eine schematische Darstellung einer zweiten Ausführungsform eines Fluidisierungsapparates in Betriebsstellung mit einer Schnittebene A-A,
- Figur 6: einen Schnitt entlang der in Fig. 5 gezeigten Schnittebene A-A durch die schematische Darstellung der zweiten Ausführungsform des Fluidisierungsapparates in Betriebsstellung mit einem in einer Ebene Z-Z angeordneten Anströmboden in horizontaler Position,
- Figur 7: einen Schnitt entlang der in Fig. 5 gezeigten Schnittebene A-A durch die schematische Darstellung der zweiten Ausführungsform des Fluidisierungsapparates in Entleerstellung mit dem in einer Ebene Z'-Z' angeordneten Anströmboden in horizontaler Position,
- Figur 8: eine vergrößerte Darstellung des in Fig. 7 dargestellten Ausschnitts A,
- Figur 9: eine Draufsicht auf eine schematische Darstellung einer dritten Ausführungsform eines Fluidisierungsapparates in Betriebsstellung mit einer Schnittebene A-A,
- Figur 10: einen Schnitt entlang der Schnittebene A-A aus Fig. 9 durch die schematische Darstellung der dritten Ausführungsform des Fluidisierungsapparates in Betriebsstellung mit einem in einer Ebene Z-Z angeordneten Anströmboden in horizontaler Position und
- Figur 11: einen Schnitt entlang der Schnittebene A-A aus Fig. 9 durch die schematische Darstellung der dritten Ausführungsform des Fluidisierungsapparates in Entleerstellung, wobei der Anströmboden in eine Ebene Z'-Z' in Achsrichtung der Längsachse X-X verschobenen und um eine Schwenkachse um einen Winkel α geschwenkt ist.

Sofern keine anderslautenden Angaben gemacht werden, bezieht sich die nachfolgende Beschreibung auf sämtliche in der Zeichnung illustrierten Ausführungsformen eines Fluidisierungsapparates 1 zur Behandlung von partikelförmigem Material M.

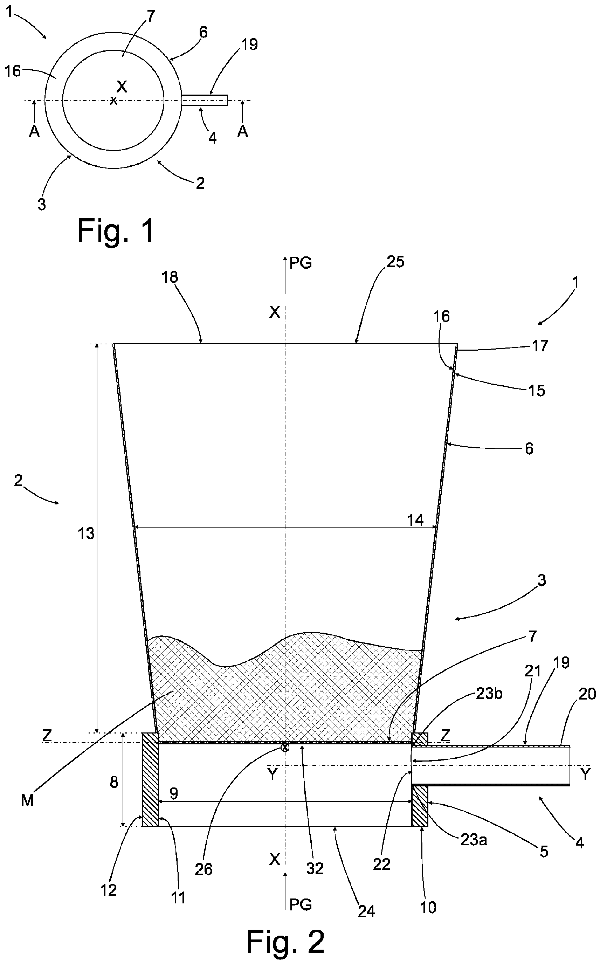

Fig. 1 zeigt eine Draufsicht auf eine schematische Darstellung einer ersten Ausführungsform des als Wirbelschichtapparat 2 ausgebildeten Fluidisierungsapparates 1 mit einer Schnittebene A-A. Der Fluidisierungsapparat 1 umfasst eine eine zentrale Längsachse X-X aufweisende Fluidisierungseinheit 3 an der ein eine senkrecht zur Längsachse X-X stehende Mittelachse Y-Y umfassendes Entleerrohr 4 angeordnet ist. Die Mittelachse Y-Y und die Längsachse X-X spannen die Schnittebene A-A auf. Der Fluidisierungsapparat 1 befindet sich im Betriebszustand.

In der Fig. 2 wird ein Schnitt entlang der in Fig. 1 gezeigten Schnittebene A-A durch die schematische Darstellung der ersten Ausführungsform des als Wirbelschichtapparat 2 ausgebildeten Fluidisierungsapparates 1 in Betriebsstellung dargestellt.

Die Fluidisierungseinheit 3 umfasst einen die Fluidisierungseinheit 3 in eine Verteilerkammer 5 und eine oberhalb der Verteilerkammer 5 angeordnete Fluidisierungskammer 6 unterteilenden, perforierten Anströmboden 7. Der Anströmboden 7 liegt in Betriebsstellung in einer senkrecht zur Schnittebene A-A aufgespannten Ebene Z-Z, sodass in Betriebsstellung zu behandelndes Material M in der Fluidisierungskammer 6 oberhalb des Anströmbodens 7 angeordnet ist. Ist der Anströmboden 7 in Betriebsstellung befindet sich der Fluidisierungsapparat 1 im Betriebszustand.

Die Fluidisierungseinheit 3 des als Wirbelschichtapparat 2 ausgebildeten Fluidisierungsapparates 1 ist rotationssymmetrisch um die zentrale Längsachse X-X ausgebildet. Andere geometrische Formen, wie rechteckig, insbesondere quadratisch, sind in anderen nicht gezeigten Ausführungsformen realisiert.

In der in Fig. 2 gezeigten Ausführungsform weist die Verteilerkammer 5 eine kreiszylindrische Form mit einem über einer Verteilerkammerhöhe 8 konstanten Verteilerkammer-Innendurchmesser 9 auf. Die Verteilerkammer 5 verfügt über eine radial zur Längsachse X-X beabstandete Verteilerkammerwand 10. Die Verteilerkammerwand 10 weist eine als Verteilerkammerinnenwand 11 bezeichnete Innenfläche der Verteilerkammerwand 10 und eine als Verteilerkammeraußenwand 12 bezeichnete Außenfläche der Verteilerkammerwand 10 auf.

Auch die Fluidisierungskammer 6 ist in der dargestellten Ausführungsform kreiszylindrisch ausgebildet, wobei die Fluidisierungskammer 6 im Gegensatz zur Verteilerkammer 5 eine konische Form mit einem über einer Fluidisierungskammerhöhe 13 von unten nach oben größer werdenden Fluidisierungskammer-Innendurchmesser 14 aufweist. Die Fluidisierungskammer 6 verfügt über eine über eine radial zur Längsachse X-X beabstandete Fluidisierungskammerwand 15. Die Fluidisierungskammerwand 15 weist eine als Fluidisierungskammerinnenwand 16 bezeichnete Innenfläche der Fluidisierungskammerwand 15 und eine als Fluidisierungskammeraußenwand 17 bezeichnete Außenfläche der Fluidisierungskammerwand 15 auf.

Die Fluidisierungskammer 6 umfasst zudem einen Materialeinlass 18 für das zu behandelnde Material M und die Verteilerkammer 5 einen Materialaustrag 19 für das behandelte Material M'. Der Materialaustrag 19 ist insbesondere als das eine Entleerrohrwand 20 aufweisende Entleerrohr 4 ausgebildet, das in der in Fig. 2 dargestellten Ausführungsform senkrecht zur Längsachse X-X der Fluidisierungseinheit 3 rotationssymmetrisch um die Mittelachse Y-Y in der Verteilerkammerwand 10 angeordnet ist. Hierbei ist ein Materialauslass 21 des Materialaustrags 19 derart angeordnet, dass der Materialauslass 21 bündig mit der Verteilerkammerinnenwand 11 ausgebildet ist. Der Materialauslass 21 weist eine Materialauslassfläche 22 auf und verfügt über eine untere und eine obere Kante 23a, 23b für den Austrag des in der Fluidisierungskammer 6 behandelten Materials M'.

Darüber hinaus weist die Verteilerkammer 5 einen Fluideinlass 24 und die Fluidisierungskammer 6 einen Fluidauslass 25 auf.

In der in Fig. 2 gezeigten Betriebsstellung ist der perforierte Anströmboden 7 in horizontaler Position in der Ebene Z-Z angeordnet, wobei ein Prozessgas PG am Fluideinlass 24 in die Fluidisierungseinheit 3 eintritt und von dem Fluideinlass 24 durch den perforierten Anströmboden 7 zum Fluidauslass 25 strömt, wo es aus der Fluidisierungseinheit 3 austritt. Der perforierte Anströmboden 7 weist zweckmäßigerweise nicht dargestellte Durchtrittsöffnungen für das Prozessgas PG auf, die beim Durchströmen einen Druckverlust erzeugen. Das Prozessgas PG fluidisiert im Betriebszustand, also in der Betriebsstellung des Anströmbodens 7, das zu behandelnde Material M in der Fluidisierungskammer 6.

Der Anströmboden 7 ist in der Fluidisierungseinheit 3 relativ zur Fluidisierungseinheit 3 bewegbar angeordnet. In der in Fig. 2 gezeigten Ausführungsform des Fluidisierungsapparates 1 weist die Fluidisierungseinheit 3 eine quer zur Längsachse X-X der Fluidisierungseinheit 3 verlaufende Schwenkachse 26 auf, an der der Anströmboden 7 schwenkbar angeordnet ist. In der dargestellten ersten Ausführungsform des Fluidisierungsapparates 1 verläuft die Schwenkachse 26 zweckmäßigerweise senkrecht zur Längsachse X-X der Fluidisierungseinheit 3 und senkrecht zur Mittelachse Y-Y des Entleerrohrs 4. Im in Fig. 2 dargestellten Betriebszustand des Fluidisierungsapparates 1 ist der Anströmboden 7 oberhalb der oberen Kante 23b angeordnet. Hierdurch wird sichergestellt, dass während der Behandlung des partikelförmigen Materials M durch das Prozessgas PG in der Fluidisierungskammer 6 kein Material M aus der Fluidisierungseinheit 3 des Fluidisierungsapparates 1 ausgetragen wird.

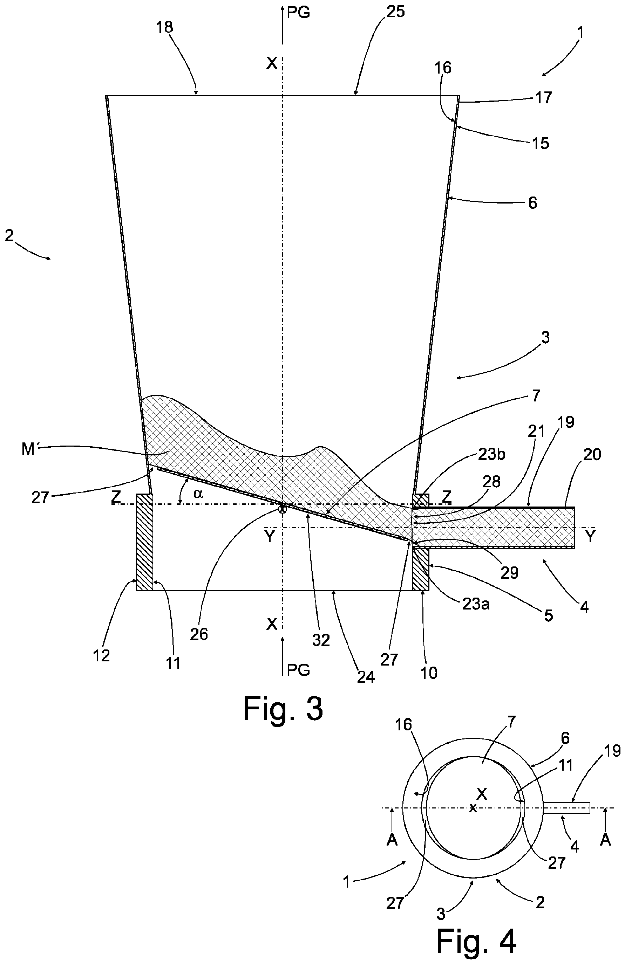

Fig. 3 zeigt den als Wirbelschichtapparat 2 ausgebildeten Fluidisierungsapparat 1 im Entleerzustand. Nach der Behandlung des partikelförmigen Materials M im Wirbelschichtapparat 2 wird das behandelte Material M' im Entleerzustand aus dem Fluidisierungsapparat 1 ausgetragen. Hierzu wird der Anströmboden 7 relativ gegenüber der Fluidisierungseinheit 3 in Form einer Schwenkbewegung bewegt, sodass dieser in Entleerstellung um eine Schwenkachse 26 geschwenkt in der Fluidisierungseinheit 3 positioniert ist. In Entleerstellung ist der Anströmboden 7 derart um einem Winkel α um die Schwenkachse 26 geschwenkt, dass zumindest ein Teil des Anströmbodens 7 unterhalb der oberen Kante 23b des Materialauslasses 21 positioniert, sodass sich eine Fluidverbindung zwischen dem in der Verteilerkammer 5 angeordneten Materialauslass 21 und der Fluidisierungskammer 6 am Anströmboden 7 vorbei ausbildet, um das behandelte Material M' aus der Fluidisierungseinheit 3 über das Entleerrohr 4 aus dem Fluidisierungsapparat 1 auszutragen. Zweckmäßigerweise ist der Anströmboden 7 um einen Winkel von 5° bis 10° geschwenkt. Hierdurch fließt das behandelte Material M' in Richtung des Materialauslasses. Unterstützt wird der Austrag des behandelten Materials M' durch das Prozessgas PG, das auch im Entleerzustand vom Fluideinlass 24 zum Fluidauslass 25 durch die Fluidisierungseinheit 3 des Fluidisierungsapparates 1 strömt. Bevorzugt ist aufgrund der Schwenkbewegung ein Teil des Anströmbodens 7 unterhalb der unteren Kante 23a positioniert. Hierdurch wird die Materialauslassfläche 22 des Materialauslasses 21 möglichst weit geöffnet, wodurch zusätzlich ein verbesserter Austrag des behandelten Materials M' befördert wird.

In der Entleerstellung bildet sich aufgrund der Schwenkbewegung durch den um die Schwenkachse 26 geschwenkten Anströmboden 7 ein Spalt 27 zwischen Anströmboden 7 und Fluidisierungseinheit 3, insbesondere zwischen Anströmboden 7 und Verteilerkammerinnenwand 11 und/oder der Fluidisierungskammerinnenwand 16, der sich im Wesentlichen um den gesamten Umfang des Anströmbodens 7 erstreckt. Eine hierbei ausgebildete Spaltbreite variiert. Durch den Spalt 27 strömt im Entleerzustand Prozessgas PG, sodass behandeltes Material M' beim Austrag von der Fluidisierungskammer 6 nicht in die Verteilerkammer 5 gelangen oder fallen kann.

In der gezeigten Ausführungsform ist der Anströmboden 7 in der Entleerstellung so positioniert, dass die Materialauslassfläche 22 des Materialauslasses 21 in eine Materialauslassteilfläche 28 oberhalb des Anströmbodens 7 und eine Prozessgasauslassfläche 29 unterhalb des Anströmbodens 7 unterteilt ist.

In der Fig. 4 wird eine Draufsicht auf eine schematische Darstellung der ersten Ausführungsform eines Fluidisierungsapparates 1 entsprechend Fig. 1 gezeigt, wobei sich der Fluidisierungsapparat 1 im Entleerzustand befindet. Hierbei ist der Anströmboden 7 in einer um die Schwenkachse 26 um den Winkel α geschwenkten Position angeordnet, wodurch sich zwischen dem Anströmboden 7 und der Fluidisierungseinheit 3, insbesondere der Verteilerkammerinnenwand 11 und/oder der Fluidisierungskammerinnenwand 16, der in der Spaltbreite variierende Spalt 27 ausbildet. Durch den Spalt 27 strömt während des Entleervorgangs Prozessgas PG, sodass kein behandeltes Material M' in die Verteilerkammer 5 gelangen kann.

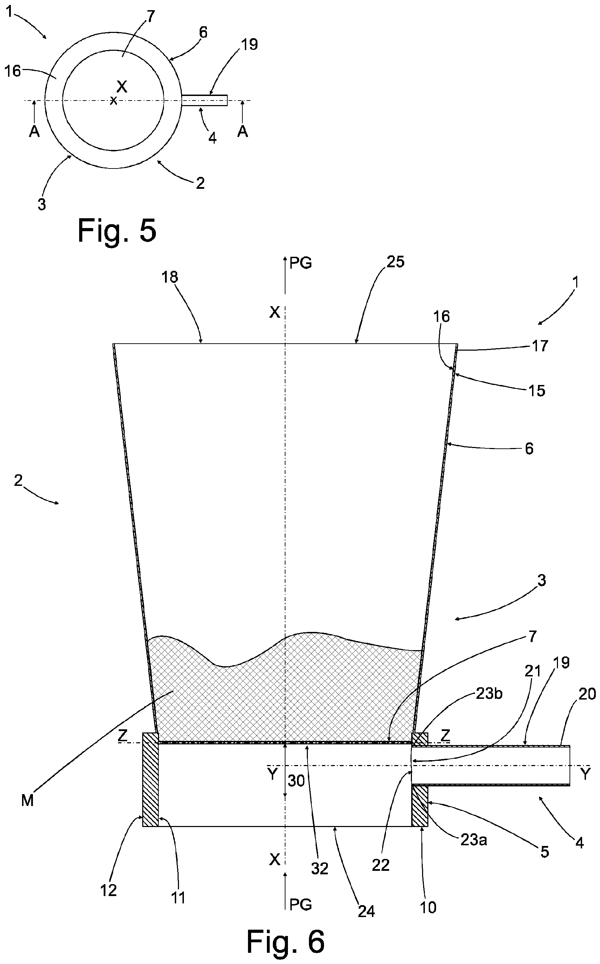

Fig. 5 zeigt entsprechend Fig. 1 eine Draufsicht auf eine schematische Darstellung einer zweiten Ausführungsform des als Wirbelschichtapparat 2 ausgebildeten Fluidisierungsapparates 1 mit einer Schnittebene A-A. Der Fluidisierungsapparat 1 umfasst eine eine zentrale Längsachse X-X aufweisende Fluidisierungseinheit 3 an der ein eine senkrecht zur Längsachse X-X stehende Mittelachse Y-Y umfassendes Entleerrohr 4 angeordnet ist. Die Mittelachse Y-Y und die Längsachse X-X spannen die Schnittebene A-A auf. Der Fluidisierungsapparat 1 befindet sich im Betriebszustand.

Ein Schnitt entlang der Schnittebene A-A aus Fig. 5 durch die schematische Darstellung der zweiten Ausführungsform des sich im Betriebszustand befindenden Fluidisierungsapparates 1 ist in Fig. 6 dargestellt. Der Anströmboden 7 liegt in Betriebsstellung in einer senkrecht zur Schnittebene A-A aufgespannten Ebene Z-Z, sodass zu behandelndes Material M im Betriebszustand in der Fluidisierungskammer 6 oberhalb des Anströmbodens 7 angeordnet ist.

Überdies ist die zweite Ausführungsform des Fluidisierungsapparates 1 im Wesentlichen baugleich mit der ersten Ausführungsform des Fluidisierungsapparates 1 ausgebildet. Die beiden Ausführungsformen unterscheiden sich einzig in der technischen Ausführung der zwischen Fluidisierungseinheit 3 und Anströmboden 7 ausgeführten Relativbewegung. Anstelle der Schwenkbewegung - wie in der ersten Ausführungsform - führt der Anströmboden 7 in der zweiten Ausführungsform eine Linearbewegung in Achsrichtung 30 der Längsachse X-X aus. Der Anströmboden 7 ist somit in Achsrichtung 30 der Längsachse X-X verschiebbar angeordnet.

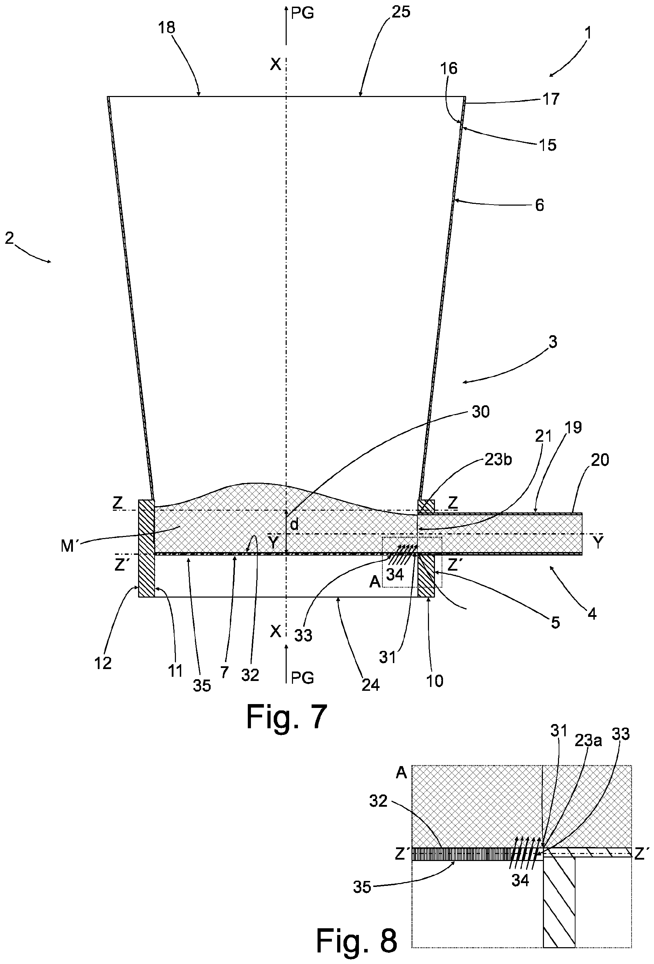

In Fig. 7 wird ein Schnitt entlang der Schnittebene A-A aus Fig. 5 durch die schematische Darstellung der zweiten Ausführungsform des Fluidisierungsapparates 1 mit einem in einer Ebene Z'-Z' angeordneten Anströmboden 7 in horizontaler Position, der Entleerstellung, gezeigt. Die Ebene Z'-Z' verläuft parallel zur Ebene Z-Z in einem Abstand d. Der Anströmboden 7 ist um den Abstand d in Achsrichtung 30 der zentralen Längsachse X-X nach unten verschoben, d.h. aus der Ebene Z-Z in die Ebene Z'-Z'. Zweckmäßigerweise ist eine obere Kante 31 des Anströmbodens 7 respektive eine Oberseite 32 auf der gleichen Höhe angeordnet wie die untere Kante 23a des Materialauslasses 21. Die obere Kante 31 und/oder Oberseite 32 sind insbesondere tangential an der unteren Kante 23a des Materialauslasses 21 angeordnet. Somit ist die Materialauslassfläche 22 des Materialauslasses 21 vollständig geöffnet, sodass der Austrag an behandelten Material M' verbessert erfolgen kann.

Zweckmäßigerweise sind im perforierten Anströmboden 7 im Bereich des Materialauslasses 21 Austragsöffnungen 33 angeordnet, die entsprechend den dargestellten Pfeilen 34 hin zum Materialauslass 21 ausgerichtet sind. Hierdurch wird im Entleerzustand der Austrag des behandelten Materials M' durch das Prozessgas PG zusätzlich unterstützt.

Fig. 8 zeigt eine vergrößerte Darstellung des in Fig. 7 dargestellten Ausschnitts A, der den Bereich des Materialauslasses 21 darstellt. Der perforierte Anströmboden 7 weist Durchtrittsöffnungen 35 auf durch die das Prozessgas PG strömt um das zu behandelnde, partikelförmige Material M in der Fluidisierungskammer 6 zu fluidisieren. Die Durchtrittsöffnungen sind beliebig anordenbar, wobei die Durchtrittsöffnungen 35 den spezifischen Anforderungen entsprechend in Anzahl und Durchtrittsöffnungs-Durchmesser ausgebildet sind. Im Bereich des Materialauslasses 21 sind im perforierten Anströmboden 7 Austragsöffnungen 33 angeordnet. Das Prozessgas PG strömt in Richtung der Pfeile 34 durch die Austragsöffnungen 33 und unterstützt so in der Entleerstellung einen effizienten und schnellen Austrag des behandelten Materials M'. Zudem ist die obere Kante 31 und/oder die Oberseite 32 des Anströmbodens 7 bis auf die Höhe der unteren Kante 23a des Materialauslasses 21 bündig abgesenkt, wodurch der Austrag von behandeltem Material M' zusätzlich aufgrund der größtmöglichen Materialauslassfläche 22 gefördert wird.

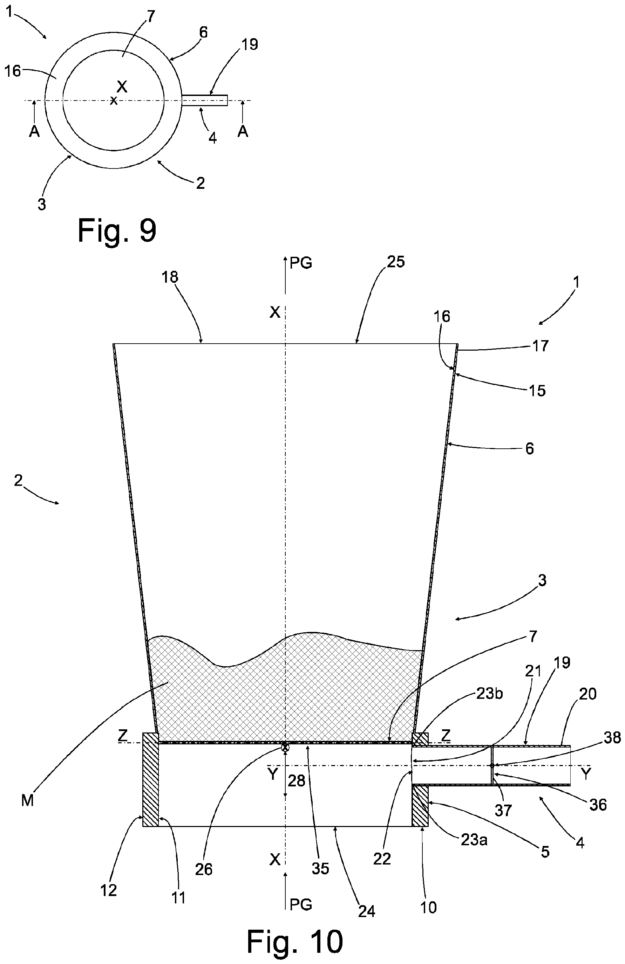

Fig. 9 zeigt eine Draufsicht auf eine schematische Darstellung einer dritten Ausführungsform des als Wirbelschichtapparat 2 ausgebildeten Fluidisierungsapparates 1 mit einer Schnittebene A-A. Der Fluidisierungsapparat 1 umfasst eine eine zentrale Längsachse X-X aufweisende Fluidisierungseinheit 3 an der ein eine senkrecht zur Längsachse X-X stehende Mittelachse Y-Y umfassendes Entleerrohr 4 angeordnet ist, wobei die Mittelachse Y-Y und die Längsachse X-X die Schnittebene A-A aufspannen. Der Fluidisierungsapparat 1 befindet sich im Betriebszustand.

In der Figur 10 wird ein Schnitt entlang der Schnittebene A-A aus Fig. 9 durch die schematische Darstellung der dritten Ausführungsform des Fluidisierungsapparates 1 im Betriebszustand mit einem in einer Ebene Z-Z angeordneten Anströmboden 7 in horizontaler Position gezeigt.

Die dritte Ausführungsform des Fluidisierungsapparates 1 ist im Wesentlichen eine Kombination der ersten beiden Ausführungsformen. Auch in der dritten Ausführungsform ist der Anströmboden 7 relativ zu der Fluidisierungseinheit 3 bewegbar. Im Unterschied zur ersten und zweiten Ausführungsform ist der Anströmboden 7 der dritten Ausführungsform geeignet einerseits eine Schwenkbewegung um die Schwenkachse 26 und andererseits eine Linearbewegung in Achsrichtung 30 der Längsachse X-X auszuführen. Im dargestellten Betriebszustand werden das partikelförmigen Material M in der Fluidisierungskammer 6 behandelt.

Die Schenk- und die Linearbewegung des Anströmbodens beim Verbringen in die Entleerstellung können in beliebiger Reihenfolge nacheinander oder zeitgleich zueinander ausgeführt werden. Hierdurch kommen sowohl die Vorteile der Schwenk- als auch der Linearbewegung zum Tragen.

Darüber hinaus weist der Materialaustrag 19 eine Absperrvorrichtung 36 auf. Die Absperrvorrichtung 36 ist zweckmäßigerweise als Klappe 37, Ventil oder Zellradschleuse oder dergleichen ausgebildet. Die als Klappe 37 ausgebildete Absperrvorrichtung 36 verschließt den Materialaustrag 19 oder gibt diesen frei. In dem in Fig. 10 dargestellten Betriebszustand - der Anströmboden 7 befindet sich oberhalb der oberen Kante des Materialauslasses 21 - verschließt die Absperrvorrichtung 36 den Materialaustrag. Somit kann weder Prozessgas PG noch zu behandelndes Material M aus der Fluidisierungseinheit 3 des Fluidisierungsapparates 1 ausströmen oder ausgetragen werden. In der gezeigten Ausführungsform ist die Klappe 37 um eine normal zur Mittelachse Y-Y angeordneten Schwenkachse 38 schwenkbar angeordnet.

Im Entleerzustand wird das in der Fluidisierungskammer 6 behandelte, partikelförmige Material M' aus der Fluidisierungseinheit 3 des Fluidisierungsapparates 1 über den als Entleerrohr 4 ausgebildeten Materialaustrag 19 ausgetragen. Die Absperrvorrichtung 36 ist hierbei um die Schwenkachse 38 verschwenkt und gibt den Materialaustrag 19 im Entleerzustand - der Anströmboden befindet sich zumindest teilweise unterhalb der oberen Kante des Materialauslasses 21 - frei.

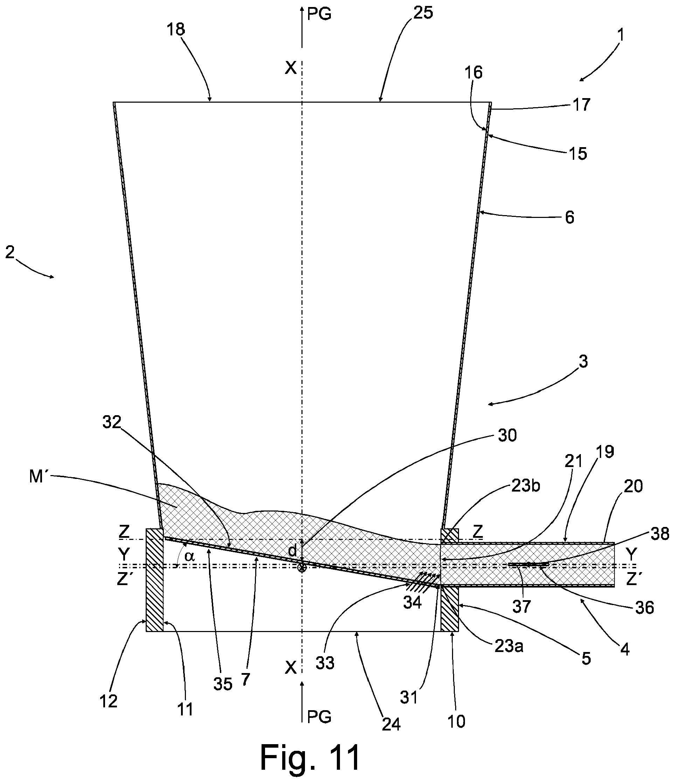

Fig. 11 zeigt hierzu einen Schnitt entlang der Schnittebene A-A aus Fig. 9 durch die schematische Darstellung der dritten Ausführungsform des Fluidisierungsapparates 1.

Der Anströmboden 7 ist zum einen um die Schwenkachse 26 um einen Winkel α geschwenkt und zum anderen ist die Schwenkachse 26 von einer Ebene Z-Z in eine parallel zur Ebene Z-Z ausgerichtete Ebene Z'-Z' in Achsrichtung 30 der Längsachse X-X verschoben. Durch das Absenken der Schwenkachse 26 des Anströmbodens 7 von einer Ebene Z-Z in eine parallele um den Abstand d verschobene Ebene Z'-Z' und das gleichzeitige Schwenken des Anströmbodens 7 um die Schwenkachse 26 wird ein verbesserter Austrag des behandelten Materials M' aus der Fluidisierungskammer 6 bewirkt. In der gezeigten Ausführungsform ist die Ebene Z'-Z' unterhalb der Mittelachse Y-Y angeordnet. Dadurch bedingt, ist es möglich den Winkel α, um den der Anströmboden 7 und die Schwenkachse 26 geschwenkt ist, klein zu halten, sodass der sich zwischen Anströmboden 7 und Fluidisierungseinheit 3 bildende Spalt 27 minimiert wird. Dies führt zu einem weiter verbesserten Austrag.

Der die Oberseite 32 des Anströmbodens 7 ist in der Entleerstellung zumindest teilweise unterhalb der unteren Kante 23a des Materialauslasses 21 positioniert. Der die Absperrvorrichtung 36 aufweisende Materialaustrag 19 ist von der um die Schwenkachse 38 verschwenkten Absperrvorrichtung 36 freigegeben, sodass das behandelte Material M' ausgetragen werden kann.

## Patentansprüche

1. Fluidisierungsapparat (1) zur Behandlung von partikelförmigem Material (M), mit einer eine Längsachse (X-X) aufweisenden Fluidisierungseinheit (3), die einen die Fluidisierungseinheit (3) in eine Verteilerkammer (5) und eine oberhalb der Verteilerkammer (5) angeordnete Fluidisierungskammer (6) unterteilenden, perforierten Anströmboden (7) aufweist, wobei die Fluidisierungskammer (6) einen Materialeinlass (18) für das zu behandelnde Material (M) und die Verteilerkammer (5) einen über einen eine Materialauslassfläche (22), eine untere und eine obere Kante (23a, 23b) aufweisenden Materialauslass (21) für das behandelte Material (M') verfügenden Materialaustrag (19) umfasst, wobei der Anströmboden (7) in einer Betriebsstellung oberhalb der oberen Kante (23b) des Materialauslasses (21) angeordnet ist und die Verteilerkammer (5) einen Fluideinlass (24) und die Fluidisierungskammer (6) einen Fluidauslass (25) für ein vom Fluideinlass (24) durch den perforierten Anströmboden (7) zum Fluidauslass (25) strömendes, das Material (M) in der Fluidisierungskammer (6) fluidisierendes Prozessgas (PG) umfasst, **dadurch gekennzeichnet, dass** der Anströmboden (7) relativ zur Fluidisierungseinheit (3) bewegbar angeordnet ist, wobei der Anströmboden (7) in einer Entleerstellung durch eine Bewegung des Anströmbodens (7) relativ zur Fluidisierungseinheit (3) zumindest teilweise unterhalb der oberen Kante (23b) des Materialauslasses (21) positioniert ist, sodass sich eine Fluidverbindung zwischen dem in der Verteilerkammer (5) angeordneten Materialauslass (21) und der Fluidisierungskammer (6) am Anströmboden (7) vorbei ausbildet, um behandeltes Material (M') aus der Fluidisierungseinheit (3) auszutragen.

2. Fluidisierungsapparat (1) nach Anspruch 1, **dadurch gekennzeichnet, dass** die Fluidisierungseinheit (3) eine quer zur Längsachse (X-X) der Fluidisierungseinheit (3) verlaufende Schwenkachse (26) aufweist, an der der Anströmboden (7) schwenkbar angeordnet ist.

3. Fluidisierungsapparat (1) nach Anspruch 2, **dadurch gekennzeichnet, dass** die Schwenkachse (26) senkrecht zur Längsachse (X-X) der Fluidisierungseinheit (3) verläuft.

4. Fluidisierungsapparat (1) nach Anspruch 1, **dadurch gekennzeichnet, dass** der Anströmboden (7) in Achsrichtung (30) der Längsachse (X-X) verschiebbar angeordnet ist.

5. Fluidisierungsapparat (1) nach einem der vorhergehenden Ansprüche, **dadurch gekennzeichnet, dass** die Fluidisierungseinheit (3) eine quer zur Längsachse (X-X) der Fluidisierungseinheit (3) verlaufende und in Achsrichtung (30) der Längsachse (X-X) verschiebbar angeordnete Schwenkachse (26) aufweist, an der der Anströmboden (7) schwenkbar angeordnet ist.

6. Fluidisierungsapparat (1) nach einem der vorhergehenden Ansprüche, **dadurch gekennzeichnet, dass** der Anströmboden (7), insbesondere die Oberseite (32) des Anströmbodens (7), in der Entleerstellung durch die Bewegung des Anströmbodens (7) relativ zur Fluidisierungseinheit (3) mit der unteren Kante des Materialauslasses bündig oder zumindest teilweise unterhalb der unteren Kante (23a) des Materialauslasses (21) positioniert ist.

7. Fluidisierungsapparat (1) nach Anspruch 6, **dadurch gekennzeichnet, dass** der Anströmboden (7), insbesondere die Oberseite (32) des Anströmbodens (7), in der Entleerstellung durch die Bewegung des Anströmbodens (7) relativ zur Fluidisierungseinheit (3) unterhalb der unteren Kante (23a) des Materialauslasses (21) positioniert ist.

8. Fluidisierungsapparat (1) nach einem der vorhergehenden Ansprüche, **dadurch gekennzeichnet, dass** der Materialaustrag (19) eine Absperrvorrichtung (36) aufweist.

9. Verfahren zur Behandlung von partikelförmigem Material (M) in einem Fluidisierungsapparat (1), mit einer eine Längsachse (X-X) aufweisenden Fluidisierungseinheit (3), die einen die Fluidisierungseinheit (3) in eine Verteilerkammer (5) und eine oberhalb der Verteilerkammer (5) angeordnete Fluidisierungskammer (6) unterteilenden, perforierten Anströmboden (7) aufweist, wobei die Fluidisierungskammer (6) einen Materialeinlass (18) für das zu behandelnde Material (M) und die Verteilerkammer (5) einen über einen eine Materialauslassfläche (22), eine untere und eine obere Kante (23a, 23b) aufweisenden Materialauslass (21) für das behandelte Material (M') verfügenden Materialaustrag (19) umfasst, wobei der Anströmboden (7) in einer Betriebsstellung oberhalb der oberen Kante (23b) des Materialauslasses (21) angeordnet ist und die Verteilerkammer (5) einen Fluideinlass (24) und die Fluidisierungskammer (6) einen Fluidauslass (25) für ein vom Fluideinlass (24) durch den perforierten Anströmboden (7) zum Fluidauslass (25) strömendes, das Material (M) in der Fluidisierungskammer (6) fluidisierendes Prozessgas (PG) umfasst, wobei in einem Betriebszustand zuerst die Fluidisierungskammer (6) über den Materialeinlass (18) mit zu behandelndem Material (M) befüllt und danach das Material (M) durch das durch die Fluidisierungskammer (6) strömende Prozessgas (PG) behandelt wird, **dadurch gekennzeichnet, dass** nach dem Betriebszustand der relativ zur Fluidisierungseinheit (3) bewegbar angeordnete Anströmboden (7) derart in eine Entleerstellung bewegt wird, dass zumindest ein Teil des Anströmbodens (7) unterhalb der oberen Kante (23b) des Materialauslasses (21) positioniert ist, sodass sich eine Fluidverbindung zwischen dem in der Verteilerkammer (5) angeordneten Materialauslass (21) und der Fluidisierungskammer (6) am Anströmboden (7) vorbei ausbildet und das behandelte Material (M') über den Materialauslass (21) aus der Fluidisierungseinheit (3) ausgetragen wird.

10. Verfahren nach Anspruch 9, **dadurch gekennzeichnet, dass** die Fluidisierungseinheit (3) eine quer zur Längsachse (X-X) der Fluidisierungseinheit (3) verlaufende Schwenkachse (26) aufweist, an der der Anströmboden (7) schwenkbar angeordnet ist und um die der Anströmboden (7) nach der Behandlung des partikelförmigen Materials (M) geschwenkt wird, zweckmäßigerweise um 5° bis 10°.

11. Verfahren nach Anspruch 9, **dadurch gekennzeichnet, dass** der Anströmboden (7) in Achsrichtung (30) der Längsachse (X-X) verschiebbar angeordnet ist und in Achsrichtung (30) der Längsachse (X-X) in Form einer Linearbewegung verschoben wird, zweckmäßigerweise bis der Anströmboden (7) unterhalb der unteren Kante (23b) positioniert ist.

12. Verfahren nach Anspruch 10 und 11, **dadurch gekennzeichnet, dass** der Anströmboden (7) beim Verbringen in die Entleerstellung eine Schwenkbewegung und eine Linearbewegung ausführt.

13. Verfahren nach einem der Ansprüche 9 bis 12, **dadurch gekennzeichnet, dass** der Anströmboden (7) in die Entleerstellung dergestalt relativ zur Fluidisierungseinheit (3) bewegt wird, sodass zumindest ein Teil des Anströmbodens (7) unterhalb der unteren Kante (23a) des Materialauslasses (21) positioniert ist, wobei zweckmäßigerweise der Anströmboden (7) in die Entleerstellung dergestalt relativ zur Fluidisierungseinheit (3) bewegt wird, sodass der Anströmboden (7) unterhalb der unteren Kante (23a) des Materialauslasses (21) positioniert ist.

14. Verfahren nach einem der Ansprüche 9 bis 13, **dadurch gekennzeichnet, dass** der Materialaustrag (19) eine Absperrvorrichtung (36) aufweist, die den Materialaustrag (19) freigibt, sobald der Anströmboden (7) sich in der Entleerstellung befindet.

15. Verfahren nach Anspruch 14, **dadurch gekennzeichnet, dass** die Absperrvorrichtung (36) den Materialaustrag (19) freigibt, sobald zumindest ein Teil des Anströmbodens (7) unterhalb der unteren Kante (23a) des Materialauslasses (21) positioniert ist.

## Claims

1. Fluidising device (1) for treating particulate material (M), having a fluidising unit (3) which has a longitudinal axis (X-X) and a perforated inflow base (7) that subdivides the fluidising unit (3) into a distributor chamber (5) and a fluidising chamber (6) that is arranged above the distributor chamber (5), wherein the fluidising chamber (6) comprises a material inlet (18) for the material (M) to be treated and the distributor chamber (5) comprises a material discharge (19) having a material outlet (21) for the treated material (M'), which outlet has a material outlet area (22), a bottom edge and a top edge (23a, 23b), wherein the inflow base (7) in an operating position is arranged above the top edge (23b) of the material outlet (21) and the distributor chamber (5) comprises a fluid inlet (24) and the fluidising chamber (6) comprises a fluid outlet (25) for a process gas (PG) which flows from the fluid inlet (24) through the perforated inflow base (7) to the fluid outlet (25) and fluidises the material (M) in the fluidising chamber (6), **characterised in that** the inflow base (7) can be moved relative to the fluidising unit (3), wherein the inflow base (7) in an emptying position is positioned at least partly below the top edge (23b) of the material outlet (21) by moving the inflow base (7) relative to the fluidising unit (3), so that a fluid connection is formed between the material outlet (21) arranged in the distributor chamber (5) and the fluidising chamber (6) past the inflow base (7) in order to discharge treated material (M') from the fluidising unit (3).

2. Fluidising device (1) according to claim 1, **characterised in that** the fluidising unit (3) has a pivot axis (26) which extends transversely to the longitudinal axis (X-X) of the fluidising unit (3) and on which the inflow base (7) is pivotably arranged.

3. Fluidising device (1) according to claim 2, **characterised in that** the pivot axis (26) extends perpendicular to the longitudinal axis (X-X) of the fluidising unit (3).

4. Fluidising device (1) according to claim 1, **characterised in that** the inflow base (7) can be moved in the axial direction (30) of the longitudinal axis (X-X).

5. Fluidising device (1) according to any of the preceding claims, **characterised in that** the fluidising unit (3) has a pivot axis (26) which extends transversely to the longitudinal axis (X-X) of the fluidising unit (3), can be moved in the axial direction (30) of the longitudinal axis (X-X) and on which the inflow base (7) is pivotably arranged.

6. Fluidising device (1) according to any of the preceding claims, **characterised in that** the inflow base (7), in particular the top side (32) of the inflow base (7), is positioned in the emptying position by moving the inflow base (7) relative to the fluidising unit (3) so as to be flush with the bottom edge of the material outlet or at least partly below the bottom edge (23a) of the material outlet (21) .

7. Fluidising device (1) according to claim 6, **characterised in that** the inflow base (7), in particular the top side (32) of the inflow base (7), is positioned below the bottom edge (23a) of the material outlet (21) in the emptying position by moving the inflow base (7) relative to the fluidising unit (3) .

8. Fluidising device (1) according to any of the preceding claims, **characterised in that** the material discharge (19) contains a shut-off device (36).

9. Method for treating particulate material (M) in a fluidising device (1), having a fluidising unit (3) which has a longitudinal axis (X-X) and a perforated inflow base (7) that subdivides the fluidising unit (3) into a distributor chamber (5) and a fluidising chamber (6) that is arranged above the distributor chamber (5), wherein the fluidising chamber (6) comprises a material inlet (18) for the material (M) to be treated and the distributor chamber (5) comprises a material discharge (19) having a material outlet (21) for the treated material (M'), which outlet has a material outlet area (22), a bottom edge and a top edge (23a, 23b), wherein the inflow base (7) in an operating position is arranged above the top edge (23b) of the material outlet (21) and the distributor chamber (5) comprises a fluid inlet (24) and the fluidising chamber (6) comprises a fluid outlet (25) for a process gas (PG) which flows from the fluid inlet (24) through the perforated inflow base (7) to the fluid outlet (25) and fluidises the material (M) in the fluidising chamber (6), wherein, in an operating state, the fluidising chamber (6) is first filled with material (M) to be treated via the material inlet (18) and thereafter the material (M) is treated by the process gas (PG) flowing through the fluidisation chamber (6), **characterised in that**, after the operating state, the inflow base (7) which can be moved relative to the fluidising unit (3) is moved into an emptying position in such a way that at least part of the inflow base (7) is positioned below the top edge (23b) of the material outlet (21) so that a fluid connection is formed between the material outlet (21) arranged in the distributor chamber (5) and the fluidising chamber (6) past the inflow base (7) and the treated material (M') is discharged from the fluidising unit (3) via the material outlet (21).

10. Method according to claim 9, **characterised in that** the fluidising unit (3) has a pivot axis (26) which extends transversely to the longitudinal axis (X-X) of the fluidising unit (3) and on which the inflow base (7) is pivotably arranged and about which the inflow base (7) is pivoted, expediently by 5° to 10°, after the particulate material (M) is treated.

11. Method according to claim 9, **characterised in that** the inflow base (7) can be moved in the axial direction (30) of the longitudinal axis (X-X) and is moved in the axial direction (30) of the longitudinal axis (X-X) in the form of a linear movement, expediently until the inflow base (7) is positioned below the bottom edge (23b).

12. Method according to claim 10 and 11, **characterised in that** the inflow base (7) performs a pivoting movement and a linear movement when being brought into the emptying position.

13. Method according to any of claims 9 to 12, **characterised in that** the inflow base (7) is moved relative to the fluidising unit (3) into the emptying position such that at least part of the inflow base (7) is positioned below the bottom edge (23a) of the material outlet (21) wherein expediently the inflow base (7) is moved relative to the fluidising unit (3) into the emptying position such that the inflow base (7) is positioned below the bottom edge (23a) of the material outlet (21).

14. Method according to any of claims 9 to 13, **characterised in that** the material discharge (19) has a shut-off device (36) which unblocks the material discharge (19) as soon as the inflow base (7) is in the emptying position.

15. Method according to claim 14, **characterised in that** the shut-off device (36) unblocks the material discharge (19) as soon as at least part of the inflow base (7) is positioned below the bottom edge (23a) of the material outlet (21).

## Revendications

1. Appareil de fluidisation (1) pour le traitement de matériau particulaire (M), avec une unité de fluidisation (3) présentant un axe longitudinal (X-X) qui présente un fond d'écoulement (7) perforé, divisant l'unité de fluidisation (3) en une chambre de distribution (5) et en une chambre de fluidisation (6) agencée au-dessus de la chambre de distribution (5), dans lequel la chambre de fluidisation (6) comprend une entrée de matériau (18) pour le matériau à traiter (M) et la chambre de distribution (5) comprend une évacuation de matériau (19) disposant d'une sortie de matériau (21) pour le matériau traité (M') présentant une surface de sortie de matériau (22), une arête inférieure et une arête supérieure (23a, 23b), dans lequel le fond d'écoulement (7) est agencé dans une position de fonctionnement au-dessus de l'arête supérieure (23b) de la sortie de matériau (21) et la chambre de distribution (5) comprend une entrée de fluide (24) et la chambre de fluidisation (6) comprend une sortie de fluide (25) pour un gaz de processus (PG) fluidisant le matériau (M) dans la chambre de fluidisation (6), s'écoulant de l'entrée de fluide (24) par le fond d'écoulement (7) perforé à la sortie de fluide (25), **caractérisé en ce que** le fond d'écoulement (7) est agencé de manière mobile par rapport à l'unité de fluidisation (3), dans lequel le fond d'écoulement (7) est positionné dans une position de vidage par un déplacement du fond d'écoulement (7) par rapport à l'unité de fluidisation (3) au moins partiellement en dessous de l'arête supérieure (23b) de la sortie de matériau (21) de sorte qu'une liaison de fluide entre la sortie de matériau (21) agencée dans la chambre de distribution (5) et la chambre de fluidisation (6) se réalise devant le fond d'écoulement (7) afin d'évacuer du matériau traité (M') de l'unité de fluidisation (3).

2. Appareil de fluidisation (1) selon la revendication 1, **caractérisé en ce que** l'unité de fluidisation (3) présente un axe de pivotement (26) s'étendant transversalement à l'axe longitudinal (X-X) de l'unité de fluidisation (3), au niveau duquel le fond d'écoulement (7) est agencé de manière pivotante.

3. Appareil de fluidisation (1) selon la revendication 2, **caractérisé en ce que** l'axe de pivotement (26) s'étend perpendiculairement à l'axe longitudinal (X-X) de l'unité de fluidisation (3).

4. Appareil de fluidisation (1) selon la revendication 1, **caractérisé en ce que** le fond d'écoulement (7) est agencé de manière mobile dans le sens axial (30) de l'axe longitudinal (X-X).

5. Appareil de fluidisation (1) selon l'une quelconque des revendications précédentes, **caractérisé en ce que** l'unité de fluidisation (3) présente un axe de pivotement (26) agencé de manière mobile dans le sens axial (30) de l'axe longitudinal (X-X) et s'étendant transversalement à l'axe longitudinal (X-X) de l'unité de fluidisation (3), au niveau duquel axe le fond d'écoulement (7) est agencé de manière pivotante.

6. Appareil de fluidisation (1) selon l'une quelconque des revendications précédentes, **caractérisé en ce que** le fond d'écoulement (7), en particulier le côté supérieur (32) du fond d'écoulement (7) est positionné dans la position de vidage par le déplacement du fond d'écoulement (7) par rapport à l'unité de fluidisation (3) à fleur avec l'arête inférieure de la sortie de matériau ou au moins partiellement en dessous de l'arête inférieure (23a) de la sortie de matériau (21).

7. Appareil de fluidisation (1) selon la revendication 6, **caractérisé en ce que** le fond d'écoulement (7), en particulier le côté supérieur (32) du fond d'écoulement (7), est positionné dans la position de vidage par le déplacement du fond d'écoulement (7) par rapport à l'unité de fluidisation (3) en dessous de l'arête inférieure (23a) de la sortie de matériau (21).

8. Appareil de fluidisation (1) selon l'une quelconque des revendications précédentes, **caractérisé en ce que** l'évacuation de matériau (19) présente un dispositif de blocage (36).

9. Procédé de traitement de matériau particulaire (M) dans un appareil de fluidisation (1), avec une unité de fluidisation (3) présentant un axe longitudinal (X-X) qui présente un fond d'écoulement (7) perforé divisant l'unité de fluidisation (3) en une chambre de distribution (5) et en une chambre de fluidisation (6) agencée au-dessus de la chambre de distribution (5), dans lequel la chambre de fluidisation (6) comprend une entrée de matériau (18) pour le matériau à traiter (M) et la chambre de distribution (5) comprend une évacuation de matériau (19) disposant d'une sortie de matériau (21) pour le matériau traité (M') présentant une surface de sortie de matériau (22), une arête inférieure et une arête supérieure (23a, 23b), dans lequel le fond d'écoulement (7) est agencé dans une position de fonctionnement au-dessus de l'arête supérieure (23b) de la sortie de matériau (21) et la chambre de distribution (5) comprend une entrée de fluide (24) et la chambre de fluidisation (6) comprend une sortie de fluide (25) pour un gaz de processus (PG) fluidisant le matériau (M) dans la chambre de fluidisation (6), s'écoulant de l'entrée de fluide (24) par le fond d'écoulement (7) perforé, dans lequel dans un état de fonctionnement, tout d'abord la chambre de fluidisation (6) est remplie par le biais de l'entrée de matériau (18) avec du matériau à traiter (M) et le matériau (M) est ensuite traité par le gaz de processus (PG) s'écoulant par la chambre de fluidisation (6), **caractérisé en ce que** selon l'état de fonctionnement, le fond d'écoulement (7) agencé de manière mobile par rapport à l'unité de fluidisation (3) est déplacé dans une position de vidage de telle manière qu'au moins une partie du fond d'écoulement (7) soit positionnée en dessous de l'arête supérieure (23b) de la sortie de matériau (21) de sorte qu'une liaison de fluide entre la sortie de matériau (21) agencée dans la chambre de distribution (5) et la chambre de fluidisation (6) se réalise devant le fond d'écoulement (7) et le matériau traité (M') soit évacué par le biais de la sortie de matériau (21) de l'unité de fluidisation (3).

10. Procédé selon la revendication 9, **caractérisé en ce que** l'unité de fluidisation (3) présente un axe de pivotement (26) s'étendant transversalement à l'axe longitudinal (X-X) de l'unité de fluidisation (3), au niveau duquel le fond d'écoulement (7) est agencé de manière pivotante et autour duquel le fond d'écoulement (7) est pivoté après le traitement du matériau particulaire (M), de manière appropriée de 5° à 10°.

11. Procédé selon la revendication 9, **caractérisé en ce que** le fond d'écoulement (7) est agencé de manière mobile dans le sens axial (30) de l'axe longitudinal (X-X) et est déplacé dans le sens axial (30) de l'axe longitudinal (X-X) sous la forme d'un déplacement linéaire, est positionné de manière appropriée jusqu'au fond d'écoulement (7) en dessous de l'arête inférieure (23b).

12. Procédé selon les revendications 10 et 11, **caractérisé en ce que** le fond d'écoulement (7) réalise lors du passage dans la position de vidage un déplacement pivotant et un déplacement linéaire.

13. Procédé selon l'une quelconque des revendications 9 à 12, **caractérisé en ce que** le fond d'écoulement (7) est déplacé dans la position de vidage par rapport à l'unité de fluidisation (3) de sorte qu'au moins une partie du fond d'écoulement (7) soit positionnée en dessous de l'arête inférieure (23a) de la sortie de matériau (21), dans lequel de manière appropriée, le fond d'écoulement (7) est déplacé dans la position de vidage par rapport à l'unité de fluidisation (3) de sorte que le fond d'écoulement (7) soit positionné en dessous de l'arête inférieure (23a) de la sortie de matériau (21).

14. Procédé selon l'une quelconque des revendications 9 à 13, **caractérisé en ce que** l'évacuation de matériau (19) présente un dispositif de blocage (36) qui libère l'évacuation de matériau (19) dès que le fond d'écoulement (7) se trouve dans la position de vidage.

15. Procédé selon la revendication 14, **caractérisé en ce que** le dispositif de blocage (36) libère l'évacuation de matériau (19) dès qu'au moins une partie du fond d'écoulement (7) est positionnée en dessous de l'arête inférieure (23a) de la sortie de matériau (21).
